# EUROPEAN PATENT APPLICATION

(11) **EP 2 236 279 A1**
(43) Date of publication of application: **06.10.2010**
(21) Application number: 10005651.4
(22) Date of filing: 21.12.2005
(51) Int. Cl.: B32B 15/08

(54) **sandwich plate**

(30) Priority: 23.12.2004 GB 0428251
(62) Divisional of application: 05821005.5
(71) Applicant: Intelligent Engineering (Bahamas) Limited, Nassau (BS)
(72) Inventor: Kennedy, Stephen John, Ottawa, Ontario K17 0N2 (CA)
(74) Representative: Leeming, John Gerard

(57) **Abstract**

A structural sandwich plate member is manufactured by adhering perimeter bars to the faceplates rather than by welding. This method enables the production of plate members with reduced distortion. Alternatively a sealant strip may be used between the perimeter frame and the faceplates.

## Description

The present invention relates to structural sandwich plate members which comprise two outer plates and a core of plastics or polymer material bonded to the outer plates with sufficient strength to substantially contribute to the structural strength of the member.

Structural sandwich plate members are described in US 5,778,813 and US 6,050,208, which documents are hereby incorporated by reference, and comprise outer metal, e.g. steel, plates bonded together with an intermediate elastomer core, e.g. of unfoamed polyurethane. These sandwich plate systems may be used in many forms of construction to replace stiffened steel plates, formed steel plates, reinforced concrete or composite steel-concrete structures and greatly simplify the resultant structures, improving strength and structural performance (e.g. stiffness, damping characteristics) while saving weight. Further developments of these structural sandwich plate members are described in WO 01/32414, also incorporated hereby by reference. As described therein, foam forms or inserts may be incorporated in the core layer to reduce weight and transverse metal shear plates may be added to improve stiffness.

According to the teachings of WO 01/32414 the foam forms can be either hollow or solid. Hollow forms generate a greater weight reduction and are therefore advantageous. The forms described in that document are not confined to being made of light weight foam material and can also be make of other materials such as wood or steel boxes, plastic extruded shapes and hollow plastic spheres.

A known method of manufacturing structural sandwich plate members is to weld bars around the perimeter of a first metal plate and then weld a second metal plate to the bars to form a closed cavity. The plastics or polymer material is then injected into the cavity through injection ports provided in one of the steel plates and sets or cures to form the composite panel. This method is generally satisfactory and can be used efficiently in factory conditions to produce structural sandwich plate members in large numbers. However, it has been experienced that using this method, particularly with thin metal plates, e.g. of 2mm or less, to form quite large panels, e.g. of about 1m by 2m, the panels are undesirably distorted.

It is an aim of the present invention to provide structural sandwich plate members that have reduced distortion and a method of manufacturing such plate members.

According to the present invention, there is provided: a structural sandwich plate member comprising: first and second outer plates; perimeter members fixed between said first and second outer plates to form a cavity; and a core of plastics or polymer material in said cavity and bonded to said outer plates with sufficient strength to transfer shear forces therebetween; wherein said perimeter members are fixed to said outer plates by adhesive.

The present invention also provides a method of manufacturing a structural sandwich plate member, the method comprising: adhering perimeter bars to first and second outer plates to form a closed cavity, and injecting plastics or polymer material into said cavity in liquid form, whereby said plastics or polymer material sets or cures so as to bond to said outer plates with sufficient strength to transfer shear forces therebetween.

A second aspect of the present invention provides a structural sandwich plate member comprising:
first and second outer plates;
perimeter members between said first and second outer plates to form a cavity;
sealant strips or gaskets between said perimeter members and said first and second outer plates and
a core of plastics or polymer material in said cavity and bonded to said outer plates with sufficient strength to transfer shear forces therebetween.

The second aspect of the invention also provides a method of manufacturing a structural sandwich plate member, the method comprising:
forming a closed cavity with first and second outer plates and perimeter members, sealant strips or gaskets being provided between said outer plates and said perimeter members; and
injecting plastics or polymer material into said cavity in liquid form;
whereby said plastics or polymer material sets or cures so as to bond to said outer plates with sufficient strength to transfer shear forces therebetween.

By fixing the perimeter bars to the outer metal plates by adhesive or tack welds, rather than a continuous weld, structural sandwich plate members can be produced with reduced distortion, for example less than 1mm in a panel of about 1m by 2m. The method can also eliminate a significant amount of weld if the post weld is also used to join panels together (only one weld is needed, rather than three). The method of the invention is also particularly suitable for automation, e.g. using a hydraulic press with heated and magnetised platens to hold the outer plates and robot arms to apply adhesive sealant or gaskets and place the perimeter bars.

The adhesive or tack welds need only be sufficiently strong to hold the perimeter bars in place during the injection and form a sealed cavity to prevent leakage of the liquid core material; once the core material is set and/or cured, the structural strength of the plate member is primarily provided by the core. However, additional strength in the adhesive fixing of the perimeter members to the outer plates can be advantageous, e.g. to contain molten core material and gases in the event of a fire and/or to resist peel off of the outer plates.
Therefore, the perimeter bars or frame may be welded to the faceplates after injection and curing of the core.

Preferably, a two-part adhesive is used with an adhesive being applied to one of the perimeter bars and the outer plates and an activator applied to the other. To improve adhesion, the bonding surfaces of the perimeter bars and the outer plates may be acid etched and cleaned and/or grit blasted.

The perimeter bars may be separately adhered to the outer metal plates, in which case additional sealant may be provided in the joins as necessary. Alternatively, the perimeter bars may be adhered or welded into a frame prior to fixing to the outer plates.

The materials, dimensions and general properties of the outer plates of the structural sandwich plate member of the invention may be chosen as desired for the particular use to which the structural sandwich plate member is to be put and in general may be as described in US-5,778,813 and US-6,050,208. Steel or stainless steel is commonly used in thicknesses of 0.5 to 20mm and aluminium may be used where light weight is desirable. Similarly, the plastics or polymer core may be any suitable material, for example an elastomer such as polyurethane, as described in US-5,778,813 and US-6,050,208. The perimeter bars can also be made out of a metal, such as steel, stainless steel or aluminium, but as they are not welded to the outer plates, there is a greater choice of materials.

The present invention may also be used to form structural sandwich plate members formed as over- or inner-lays to existing structures - as described in International Applications WO02/2034 and PCT/GB2003/004628, which documents are hereby incorporated in their entirety by reference - in which case one of the outer metal plates is a part of the existing structure.

The present invention will be described below with reference to exemplary embodiments and the accompanying schematic drawings, in which:
Figure 1 is a cross-sectional view of a structural sandwich plate member according to a first embodiment of the present invention;
Figure 2 is a perspective view showing the attachment of a perimeter frame to a first metal plate in a first method embodying the invention;
Figure 3 is a perspective view showing the attachment of a second outer plate to a perimeter frame in a first method embodying the invention;
Figure 4 is a cross-sectional view of a structural sandwich plate member according to a second embodiment of the present invention;
Figure 5 is a perspective view showing the attachment of a perimeter frame to a first metal plate in a second method embodying the invention; and
Figure 6 is a perspective view showing the attachment of a second outer plate to a perimeter frame in a second method embodying the invention.

In the various drawings, like parts are indicated by like reference numerals.

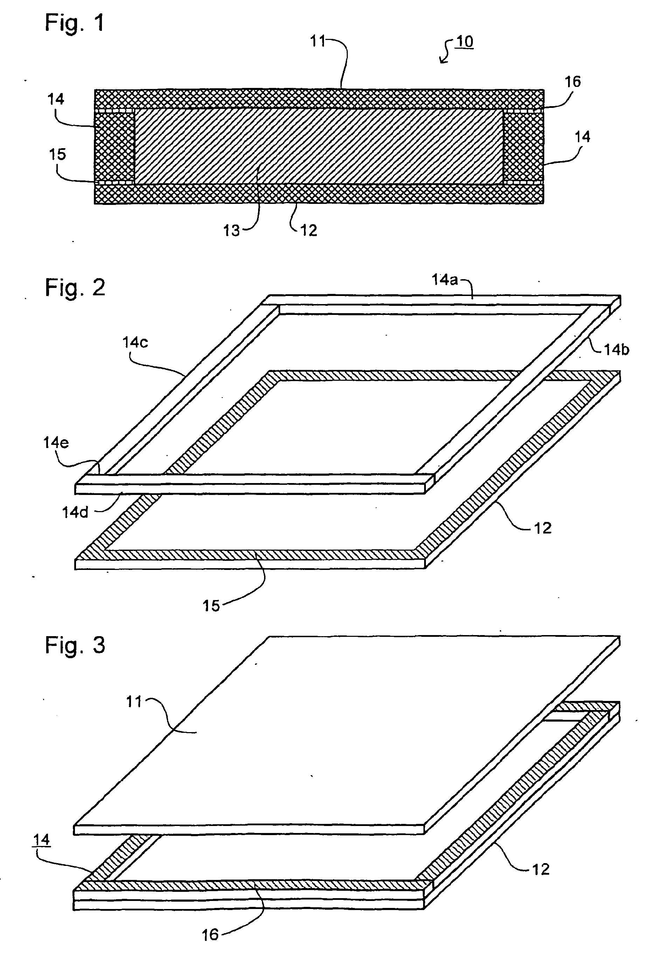

The structural sandwich plate member shown in Figure 1 comprises upper and lower outer plates (faceplates) 11, 12 which may be of steel or aluminium and have a thickness, for example, in the range of from 0.5 to 20mm. Perimeter bars 14 are adhered by adhesive 15, 16 between the face plates 11, 12 around their outer peripheries to form a closed cavity. In the cavity between the face plates 11, 12 is a core 13 of plastics or polymer material, preferably a compact thermosetting material such as polyurethane elastomer. This core may have any thickness, particularly a thickness in the range of from 15 to 200mm. For thinner cores, pre and post heating of the core may be necessary. The core 13 is bonded to the face plates 11, 12 with sufficient strength and has sufficient mechanical properties to transfer shear forces expected in use between the two face plates. The bond strength between the core 13 and face plates 11, 12 should be greater than 3MPa, preferably 6MPa, and the modulus of elasticity of the core material should be greater than 200MPa, preferably greater than 250MPa, especially if expected to be exposed to high temperatures in use. For low load applications, such as floor panels, where the typical use and occupancy loads are of the order of 1.4kPa to 7.2kPa, the bond strength may be lower, *e*.*g*. approximately 0.5MPa. By virtue of the core layer, the structural sandwich plate member has a strength and load bearing capacity of a stiffened steel plate having a substantially greater plate thickness and significant additional stiffening. The plate, of course, need not be flat but may take any form required for its intended use. The core is preferably compact, meaning that it is not a foam and has few or no internal voids. It preferably subsatntially completely fills the core cavity.

To manufacture the structural sandwich plate member 10, the inner surfaces of faceplates 12, 13 are prepared by any suitable surface treatment, e.g. by acid etching and cleaning and/or grit blasting and/or corona, so that the surfaces are sufficiently clean and smooth to form a good bond to the core material and to the adhesive which is to fix the perimeter bars. One faceplate 12 is then held on a platen, with the prepared surface uppermost, and one component, e.g. the adhesive, of a two-component adhesive 15 is applied to the peripheral area. The second component, e.g. the activator, of the adhesive 15 is then applied to the perimeter bars 14a-d which are then positioned on the faceplate 12 and correctly positioned. If a suitable adhesive and activator, e.g. Flexon (RTM) F246 Structural Adhesive and Activator No. 5 or No. 1 (available from PERMABOND International, a Division of National Starch & Chemical Company, 10 Findeme Avenue, Bridgewater, NJ 08807, USA) is used, the adhesive remains workable for a few minutes to enable the position of the perimeter bars to be set accurately. Once in place, the perimeter bars are preferably loaded, e.g. by a weight or press, whilst the adhesive cures. The perimeter bars may be fixed in place individually or fixed together by adhesive or welds to form a frame before being fixed to the faceplate. If the perimeter bars 14a-d are fixed individually, additional adhesive, e.g. a methacrylate adhesive such as Plexus (RTM) (available from ITW Plexus, a business unit of Illinois Tool Works), is preferably used to fill the joints to ensure an air tight seal. The adhesive is preferably heat resistant.

Next, one component of adhesive 16 is applied to the upper surface of the perimeter bars or frame 14 and the other to the underside of faceplate 11, which is then fixed in place, forming the cavity into which the core material is to be injected. A jig may be used to facilitate positioning of the upper faceplate 11. Again, the upper faceplate 11 can be loaded by a weight or a press during curing of the adhesive. The adhesive may also be used to apply internal double plates.

The core material is injected into the core cavity via injection ports (not shown) in either of the faceplates or the perimeter frame. Vent holes can be provided in any convenient position. Both vent holes and injection ports are preferably filled and ground flush after injection is completed. During the injection and curing of the core material, the faceplates may need to be restrained to prevent buckling due to thermal expansion of the core caused by the heat of curing. With the method of the invention, the tolerance on the core volume may be sufficiently small to allow metered injection.

Although not shown, spacers, lightweight forms, shear plates and other inserts may be positioned in the core cavity before the upper faceplate 11 is fixed in place. Spacers in particular are advantageous to ensure that the faceplate spacing, and hence core thickness, is uniform across the plate member.

The manufacture of the plate member may be performed in situ, or off-site in factory conditions and the finished panel transported to the installation site. Although a flat plate is illustrated, the plate member may of course take any curved or complex shape as desired and the invention is particularly applicable to the manufacture of plate members with complex shapes and relatively tight dimensional tolerances. Especially in a factory environment, the manufacture of the plates may be automated, using a hydraulic "oyster" press with heated and magnetised platens. Numerically controlled robot arms may be used to place the perimeter bars and dispense the components of the adhesive.

In experiments using faceplates of 1920mm by 920mm and an initial distortion of less than 1mm, the method of the invention was able to produce structural sandwich plate members with a total distortion of less than 1mm.

The procedure is essentially the same where the structural sandwich plate member is formed as an overlay to an existing structure. The perimeter bars or frame are adhered to the existing plate and the new overlay plate in either order or simultaneously, as convenient.

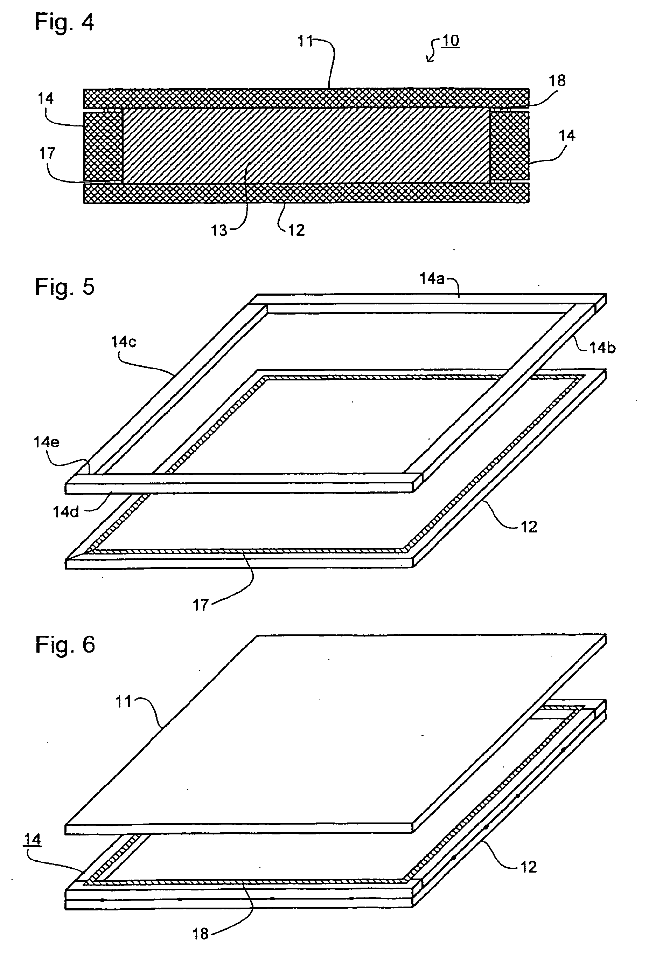

In a second embodiment of the invention, shown in Figures 4 to 6, the metal faceplates are secured to the perimeter frame by tack welds 19 and a seal is ensured using flexible strips 17, 18 or (a) gasket(s) placed between the perimeter frame and the faceplates. Otherwise the second embodiment is the same as the first.

The sealant strip or gasket should have sufficient flexibility to ensure a seal, be compatible with the uncured core material and have sufficient dimensions and mechanical properties to withstand the heat and pressure of the curing process as well as the heat of the tack welding process. EPDM (ethylene propylene diene-monomer terpolymer) foam strips of dimensions about 6mm wide by 3mm thick have been found to be suitable. Other ethylene, alpha-olefin diene monomer terpolymers may be suitable. Rubber compounds that melt under the temperatures occurring during welding are less suitable as the molten material may run in to the weld and prevent formation of a good weld. The face plate(s) and perimeter frame may be clamped together during formation of the tack welds, which need only be sufficient in size and number to withstand the pressure of injection and curing of the core material.

The sealant strip or gasket is preferably positioned around the inner periphery of the perimeter frame so as to be as far as possible from the tack welds, preferably at least 3mm. At the corners, two pieces of sealant strip may be butted against each other or a single piece may be bent around the corner. Overlapping the sealant strips or gaskets is preferably avoided. Preferably the sealant strip or gasket has adhesive on one side only by which it is adhered to one of the perimeter frame or a faceplate; the position of the perimeter frame or faceplate can then be adjusted at will until the tack welds are made.

Since the tack welds are used only to hold the faceplates and perimeter bar in place during injection and curing of the core, a jig may be used instead.

It will be appreciated that the above description is not intended to be limiting and that other modifications and variations fall within the scope of the present invention, which is defined by the appended claims.

According to an embodiment, there is provided a structural sandwich plate member comprising:
first and second outer plates;
perimeter members fixed between said first and second outer plates to form a cavity; and
a core of plastics or polymer material in said cavity and bonded to said outer plates with sufficient strength to transfer shear forces therebetween;
wherein said perimeter members are fixed to said outer plates by adhesive.

The perimeter members may be fixed to each other by adhesive.

The perimeter members may be fixed to each other by welding.

The adhesive may be a two-component adhesive.

According to an embodiment, there is provided a structural sandwich plate member comprising:
first and second outer plates;
perimeter members between said first and second outer plates to form a cavity;
sealant strips or gaskets between said perimeter members and said first and second outer plates and
a core of plastics or polymer material in said cavity and bonded to said outer plates with sufficient strength to transfer shear forces therebetween.

The sealant strips or gaskets may be made of an ethylene, alpha-olefin diene monomer terpolymer, preferably ethylene propylene diene monomer terpolymer.

The structural sandwich plate member may further comprise a plurality of tack welds between said perimeter members and said first and second outer plates.

The sealant strip or gasket may have uncompressed dimensions in the range of from 3 to 10mm width by 1 to 5mm thickness.

The sealant strip or gasket may have adhesive on one side thereof.

Any embodiment may have a filled vent hole and a filled injection port in said perimeter frame.

In any embodiment, the plastics or polymer material may be compact.

Any embodiment may include at least one preformed spacer in said cavity.

In any embodiment, the outer plates may have a thickness of less than about 2mm.

According to an embodiment there is provided a method of manufacturing a structural sandwich plate member, the method comprising:
adhering perimeter members to first and second outer plates to form a closed cavity; and
injecting plastics or polymer material into said cavity in liquid form;
whereby said plastics or polymer material sets or cures so as to bond to said outer plates with sufficient strength to transfer shear forces therebetween.

The step of adhering may include applying one component of a two component adhesive to said perimeter members and the other component to said faceplates.

In the step of adhering a robot arm may be used to apply adhesive.

Prior to said step of adhering, bonding surfaces of the perimeter members and/or the outer plates may be prepared by acid etching, cleaning and/or grit blasting.

According to an embodiment, there is provided a method of manufacturing a structural sandwich plate member, the method comprising:
forming a closed cavity with first and second outer plates and perimeter members, sealant strips or gaskets being provided between said outer plates and said perimeter members; and
injecting plastics or polymer material into said cavity in liquid form;
whereby said plastics or polymer material sets or cures so as to bond to said outer plates with sufficient strength to transfer shear forces therebetween.

The step of forming a closed cavity may include forming a plurality of tack welds between said outer plates and said perimeter members.

The outer plates and said perimeter members may be clamped together during the tack welding step.

In any embodiment, said outer plates may be held in a hydraulic press during said step of adhering.

The hydraulic press may be provided with heated and magnetised platens.

In any embodiment, the perimeter members may be separately fixed to a first one of the outer metal plates.

The method may further comprise filling the joints between said perimeter members.

In any embodiment, the perimeter members may be adhered or welded into a frame prior to fixing to the outer plates.

In any embodiment, the method may further comprise the step of welding the perimeter members to said outer plates after curing of said core.

## Claims

1. A method of manufacturing a structural sandwich plate member (10), the method comprising:
adhering perimeter members (14a-14d) to first and second outer plates (11, 12) to form a closed cavity; and
injecting plastics or polymer material into said cavity in liquid form;
whereby said plastics or polymer material sets or cures so as to form a compact core (13) to bond to said outer plates (11, 12) with sufficient strength to transfer shear forces therebetween, the method further comprising:
welding the perimeter members (14a-14d) to said outer plates (11, 12) after curing of said core.

2. A method according to claim 1 wherein said step of adhering includes applying one component of a two component adhesive to said perimeter members (14a-14d) and the other component to said outer plates (11, 12).

3. A method according to any one of claims 1 or 2 wherein in said step of adhering a robot arm is used to apply adhesive.

4. A method according to any one of claims 1 to 3 wherein prior to said step of adhering, bonding surfaces of the perimeter members (14a-14d) and/or the outer plates (11, 12) are prepared by acid etching, and/or by cleaning, and/or by grit blasting.

5. A method according to any one of claims 1 to 4 wherein said outer plates (11, 12) are held in a hydraulic press during said step of adhering.

6. A method according to claim 5 wherein said hydraulic press is provided with heated and magnetised platens.

7. A method according to any one of claims 1 to 6 wherein said perimeter members (14a-14d) are separately fixed to a first one of the outer metal plates (11, 12).

8. A method according to claim 7 further comprising filling the joints between said perimeter members (14a-14d).

9. A method according to any one of claims 1 to 6 wherein said perimeter members (14a-14d) are adhered or welded into a frame prior to fixing to the outer plates (11, 12).
